# EUROPÄISCHE PATENTSCHRIFT

(11) **EP 3 190 937 B1**
(45) Veröffentlichungstag und Bekanntmachung des Hinweises auf die Patenterteilung: **18.04.2018**
(21) Anmeldenummer: 15753677.2
(22) Anmeldetag: 20.08.2015
(51) Int. Cl.: A47J 43/07, A47J 27/00, A47J 27/04

(54) **GARAUFSATZ FÜR EIN AUFHEIZBARES GEFÄSS EINER KÜCHENMASCHINE**
COOKING ATTACHMENT FOR A HEATABLE VESSEL OF A FOOD PROCESSOR
REHAUSSE DE CUISSON POUR UN RÉCIPIENT CHAUFFANT D'UN ROBOT MÉNAGER

(30) Priorität: 09.09.2014 DE 102014112959
(43) Veröffentlichungstag der Anmeldung: 19.07.2017
(73) Patentinhaber: Vorwerk & Co. Interholding GmbH, 42275 Wuppertal (DE)
(72) Erfinder: CORNELISSEN, Markus, 53332 Bornheim (DE)
(74) Vertreter: Müller, Enno
(86) Internationale Anmeldenummer: PCT/EP2015/069125
(87) Internationale Veröffentlichungsnummer: WO 2016/037824

(56) Entgegenhaltungen:
- WO-A1-95/29615
- DE-A1-102011 000 452

## Beschreibung

Die Erfindung betrifft einen Garaufsatz für ein aufheizbares Gefäß einer Küchenmaschine, welcher Garaufsatz eine oder mehrere Bodenöffnungen aufweist, durch welche aus dem Gefäß austretender Dampf in den Garaufsatz eintreten und Kondensat aus dem Garaufsatz in das Gefäß fließen kann.

Garaufsätze der vorgenannten Art sind im Stand der Technik bekannt. Die Druckschrift DE 10 2011 000 452 A1 offenbart beispielsweise eine elektrische Küchenmaschine mit einem beheizbaren Rührgefäß und einem auf das Rührgefäß aufsetzbaren Garaufsatz, in dessen Bodenbereich partiell Perforierungen angeordnet sind, durch welche Dampf aus dem Rührgefäß in den Garaufsatz eintreten kann. Sich innerhalb des Garaufsatzes bildendes Kondensat kann wiederum durch die Perforierungen zurück in das Rührgefäß fließen.

Davon ausgehend ist es Aufgabe der Erfindung, den Garaufsatz derart weiterzubilden, dass in dem Garaufsatz enthaltene Speisen unabhängig von ihrer Position innerhalb des Garaufsatzes optimal, d. h. insbesondere schneller und gleichmäßiger, gegart werden und/oder nach der Zubereitung warmgehalten werden können.

Zur Lösung der vorgenannten Aufgabe schlägt die Erfindung vor, dass der Garaufsatz eine unabhängig von dem aus dem Gefäß austretenden Dampf heizende Heizeinrichtung aufweist.

Erfindungsgemäß weist der Garaufsatz nun eine Heizeinrichtung auf, welche die in dem Garaufsatz enthaltenen Speisen völlig unabhängig von einem aus dem Gefäß in den Garaufsatz eintretenden Dampfstrom heizt. Dadurch kann der Garprozess vorteilhaft beschleunigt werden. Die erfindungsgemäße Heizeinrichtung kann separat oder auch zusätzlich zu der Dampfbeaufschlagung betrieben werden.

Die Funktion der Heizeinrichtung ist im Gegensatz zu der Dampfbeaufschlagung nicht von einer bestimmten Orientierung des Garaufsatzes zu dem aufheizbaren Gefäß abhängig. Darüber hinaus kann die Heizeinrichtung an unterschiedlichen Positionen in oder an dem Garaufsatz angeordnet sein, so dass auch entfernt von dem aufheizbaren Gefäß angeordnete Speisen genauso schnell geheizt werden können wie in der Nähe des aufheizbaren Gefäßes angeordnete Speisen.

Dadurch, dass die Heizeinrichtung unabhängig von dem aus dem Gefäß austretenden Dampf arbeitet, kann der Garvorgang innerhalb des Garaufsatzes bereits dann beginnen, wenn eine in dem aufheizbaren Gefäß enthaltene Flüssigkeit noch nicht kocht und somit noch kein Dampf in den Garaufsatz gelangt. Somit ist der Garaufsatz durch die erfindungsgemäße Heizeinrichtung unabhängig von der Dampfbildung innerhalb des Gefäßes.

Darüber hinaus ist es ebenfalls vorteilhaft, dass in dem Garaufsatz vorhandener Dampf aufgrund der durch die Heizeinrichtung erhöhten Temperatur erst später kondensiert oder zuerst an den kälteren Speisen kondensiert und nicht an der Wandung des Garaufsatzes. Dies bewirkt eine unmittelbare Wärmeübertragung auf die Speisen.

Nicht zuletzt ermöglicht die Heizeinrichtung vorteilhaft auch eine Verwendung des Garaufsatzes als aktiv geheizten Warmhaltebehälter. Dabei kann der Garaufsatz völlig unabhängig von der Küchenmaschine bzw. dem aufheizbaren Gefäß der Küchenmaschine in Alleinstellung verwendet werden, so dass sich vorteilhaft eine doppelte Funktion des Garaufsatzes ergibt.

Zur Ausbildung der erfindungsgemäßen Heizeinrichtung sind grundsätzlich alle möglichen Heizungsarten denkbar, die geeignet sind, in oder an einem Garaufsatz installiert zu werden und mit denen sinnvoll Speisen gegart oder erwärmt werden können. Nur beispielsweise werden hier Induktionsheizungen mit entsprechender Peripherie zur Erzeugung von Wirbelströmen, Röhrenheizkörper, Dickschichtheizungen, Konvektionsheizungen und ähnliche genannt.

Es wird vorgeschlagen, dass der Garaufsatz eine Garaufsatzwandung aufweist, wobei die Heizeinrichtung in oder an der Garaufsatzwandung angeordnet ist. Beispielsweise ist es möglich, die Heizeinrichtung nach der Art einer Widerstandsheizung auszubilden, wobei ein Heizelement oder mehrere Heizelemente in oder an der Garaufsatzwandung angeordnet sein können. Die Heizelemente können beispielsweise ringförmig oder streifenförmig in der Garaufsatzwandung angeordnet sein. Die Heizelemente können so in der Garaufsatzwandung angeordnet sein, dass diese vollständig in das Material der Garaufsatzwandung eingebettet sind und somit nicht in Kontakt mit den zuzubereitenden Speisen treten. Alternativ ist es jedoch auch möglich, dass die Heizelemente einen Teil der Innenwandung des Garaufsatzes bilden, so dass diese unmittelbar mit den Speisen in Berührung kommen. Die Heizelemente können ebenso innerhalb oder außerhalb des Zubereitungsraumes des Garaufsatzes angeordnet sein. In jedem Fall kann die Heizeinrichtung die Speisen entweder direkt oder indirekt heizen, wobei bei einer indirekten Heizung zuerst die Garaufsatzwandung aufgeheizt wird, welche sodann die Wärmeenergie auf die an der Garaufsatzwandung anliegenden Speisen überträgt.

Des Weiteren wird vorgeschlagen, dass der Garaufsatz einen Deckel mit einer Deckelwandung aufweist, wobei die Heizeinrichtung in oder an der Deckelwandung angeordnet ist. Der beheizte Deckel kann vorteilhaft auch in Verbindung mit der zuvor dargestellten beheizten Garaufsatzwandung verwendet werden, so dass die in dem Garaufsatz enthaltenen Speisen von allen Seiten geheizt werden. Dadurch ist ein besonders homogenes Garergebnis und eine kurze Zubereitungszeit möglich. Ebenso eignet sich diese Ausgestaltung auch besonders zum Überbacken oder Grillen von Speisen. Wie zuvor auch in Bezug auf die beheizte Garaufsatzwandung dargestellt, kann die Heizeinrichtung in oder an der Deckelwandung angeordnet sein, wobei die Heizelemente entweder in das Material des Deckels eingebettet sind oder außerhalb der Deckelwandung angeordnet sind.

Darüber hinaus wird vorgeschlagen, dass der Garaufsatz einen Einlegeboden aufweist, wobei die Heizeinrichtung in oder an dem Einlegeboden angeordnet ist. Insbesondere kann der Garaufsatz auch mehrere Einlegeböden aufweisen, welche übereinander so innerhalb des Garaufsatzes angeordnet werden können, dass sich verschiedene Ebenen zur Anordnung von zu garenden Speisen ausbilden. Beispielsweise können Speisen, welche zum Garen eine geringere Temperatur benötigen, auf einem oberen Einlegeboden angeordnet sein, während Speisen, die eine höhere Gartemperatur erfordern, auf einem darunter angeordneten Einlegeboden oder unmittelbar auf einem Bodenbereich des Garaufsatzes angeordnet sind. Die Heizeinrichtung kann in den Einlegeboden eingebettet sein oder von außen an dem Einlegeboden angebracht sein. Je nach der besonderen Ausgestaltung lässt sich somit die Abgabe von Wärmeenergie nach oben und/oder unten (ausgehend von der Ebene des Einlegebodens) erreichen.

Die Erfindung ermöglicht eine besonders flexible Positionierung der Heizeinrichtung in oder an dem Garaufsatz. Die Heizeinrichtung kann dabei in einzelne Teileinrichtungen aufgeteilt sein, welche separat an der Garaufsatzwandung, der Deckelwandung und/oder dem Einlegeboden angeordnet sind. Je nach der Position und Anzahl der verwendeten Teileinrichtungen können unterschiedliche Temperaturzonen geschaffen werden, die gegebenenfalls auch einzeln ansteuerbar sind. Somit können unterschiedliche Speisen nach dem für diese bestmöglichen Garverfahren zubereitet werden. Ebenso ist es möglich, unterschiedliche Speisen durch die verschiedenen Temperaturzonen zu einem gewünschten Zeitpunkt gleichzeitig fertigzustellen.

Die Heizeinrichtung kann vollflächig oder teilflächig in oder an dem Garaufsatz ausgebildet sein. Darüber hinaus kann die Heizeinrichtung insgesamt oder in Bezug auf jede einzelne Teileinrichtung oder mehrere Teileinrichtungen der Heizeinrichtung separat gesteuert werden. Zusätzlich kann ein Ein- oder Ausschalten der Heizeinrichtung entweder durch einen Nutzer manuell oder durch eine Steuerung der Küchenmaschine automatisch erfolgen. Der Heizvorgang kann beispielsweise intermittierend oder permanent durchgeführt werden oder auch abhängig von bestimmten Zubereitungsphasen eines Rezeptes. Beispielsweise kann die Heizeinrichtung des Garaufsatzes während der Aufheizung von Wasser innerhalb des aufheizbaren Gefäßes der Küchenmaschine betrieben werden, so dass die Zeit bis zum Erreichen des Siedepunktes zum Garen (Vorwärmen) der Speisen mittels der Heizeinrichtung genutzt werden kann. Insgesamt ergibt sich dadurch eine kürzere Gesamtgardauer/Zubereitungszeit.

Es kann vorgesehen sein, dass der Garaufsatz und/oder der Einlegeboden eine Rinne aufweist, welche ausgebildet ist, Flüssigkeit, insbesondere in dem Garaufsatz entstehendes Kondensat und/oder Flüssigkeit von in dem Garaufsatz enthaltenen Speisen, aufzunehmen. Der Garaufsatz und/oder auch gegebenenfalls ein Einlegeboden des Garaufsatzes weist somit eine Rinne auf, in welcher sich Kondensat oder Speisenflüssigkeit sammeln kann. Alternativ kann Flüssigkeit auch manuell in die Rinne gegeben werden. Das Kondensat oder die Flüssigkeit kann erhitzt und verdampft werden, so dass dieses oder diese dem Garprozess innerhalb des Garaufsatzes weiterhin zur Verfügung steht. Es ist somit nicht erforderlich, dass das Kondensat/ die Flüssigkeit zurück in das aufheizbare Gefäß geleitet wird, um dort wieder verdampft zu werden.

Die Rinne und/oder ein peripherer Bereich, welcher an die Rinne angrenzt, kann gezielt beheizt werden, um zumindest einen Teil des Kondensats/der Flüssigkeit zu verdampfen. Besonders vorteilhaft ist die Bereitstellung der erfindungsgemäßen Rinne dann, wenn der Garaufsatz ausschließlich als Warmhaltegefäß getrennt von dem aufheizbaren Gefäß der Küchenmaschine verwendet wird. Das in der Rinne enthaltene Kondensat bzw. die Flüssigkeit wird dann mittels der Heizeinrichtung verdampft, so dass die Speisen im Sinne einer Warmhaltefunktion des Garaufsatzes mit Hilfe des heißen Dampfes weiter warmgehalten und feucht gehalten werden.

Die erfindungsgemäße Rinne kann in der Garaufsatzwandung ausgeformt sein. Dabei weist die Garaufsatzwandung beispielsweise eine rinnenförmige Einbuchtung auf, in welcher sich Flüssigkeit sammeln kann. Ebenso ist es auch möglich, dass die Garaufsatzwandung als solche nicht verändert wird, sondern eine separate Rinne an der Garaufsatzwandung angeordnet wird. Vorteilhaft kann die Rinne in beiden Fällen so ausgebildet sein, dass diese einen Bodenbereich der Garaufsatzwandung ringförmig begrenzt. Dabei verläuft die Rinne vorteilhaft zwischen dem Bodenbereich und einem Seitenbereich des Garaufsatzes. Vorteilhaft fließt innerhalb des Garaufsatzes gebildetes Kondensat an den Seitenbereichen herab und gelangt in die Rinne, wo es schließlich durch eine im Bereich der Rinne angeordnete Heizeinrichtung wieder verdampfen kann. Die Rinne kann als vollständiger Ring ausgebildet sein oder alternativ auch nur als ein Teilbereich eines Ringes. Die Rinne kann darüber hinaus entweder vollständig beheizt sein oder auch nur in Bezug auf bestimmte Abschnitte. Darüber hinaus ist es ebenfalls möglich, Kondensat oder Flüssigkeit gezielt in bestimmte Bereiche der Rinne zu lenken.

In jedem Fall kann vorgesehen sein, dass die Heizeinrichtung eine Mehrzahl von in oder an der Garaufsatzwandung und/oder der Deckelwandung und/oder dem Einlegeboden ausgebildeten Teileinrichtungen aufweist.

Neben dem zuvor erläuterten Garaufsatz wird auch eine Küchenmaschine, insbesondere ein Kochmixgerät, mit einem erfindungsgemäßen Garaufsatz vorgeschlagen.

Schließlich wird mit der Erfindung auch ein Verfahren zum Warmhalten und/ oder Zubereiten von Speisen innerhalb eines Garaufsatzes, insbesondere innerhalb eines zuvor beschriebenen erfindungsgemäßen Garaufsatzes, vorgeschlagen, wobei innerhalb einer in dem Garaufsatz ausgebildeten Rinne enthaltene Flüssigkeit mittels einer der Rinne zugeordneten Heizeinrichtung verdampft wird, wobei die Rinne die Speisen, insbesondere ringförmig, umgibt, so dass aus der Rinne aufsteigender Dampf die nicht in Kontakt mit dem Garaufsatz und/oder einem Einlegeboden des Garaufsatzes stehenden Oberflächen der Speisen befeuchtet und/oder erwärmt. Das erfindungsgemäße Verfahren, bei welchem Flüssigkeit aus einer in dem Bodenbereich des Garaufsatzes ausgebildeten Rinne verdampft wird, kann sowohl zum Warmhalten als auch zur Zubereitung von Speisen verwendet werden. Wesentlich ist dabei, dass der Rinne zur Erzeugung von Dampf eine Heizeinrichtung zugeordnet ist, welche die in der Rinne enthaltene Flüssigkeit verdampft, so dass die in dem Garaufsatz enthaltenen Speisen befeuchtet und/oder erwärmt werden. Vorteilhaft bildet sich durch die ringförmige Ausbildung der Rinne im Bodenbereich des Garaufsatzes eine Dampfglocke aus, welche die Speisen umgibt. Insofern ist das erfindungsgemäße Verfahren beispielsweise sowohl bei Standalone-Geräten zur Warmhaltung von Speisen als auch zur Zubereitung, insbesondere zum Garen oder Vorheizen, von Speisen geeignet.

Darüber hinaus kann vorgesehen sein, dass die in der Rinne enthaltene Flüssigkeit bei einer zeitlich vorausgegangenen Zubereitung der Speisen innerhalb des Garaufsatzes, insbesondere Dampfgarung, entstandenes Kondensat ist. Gemäß dieser Verfahrensführung muss die Flüssigkeit nicht von Hand in die Rinne eingefüllt werden, sondern die Flüssigkeit besteht aus Kondensat, welches während einer zeitlich vorausgegangenen Zubereitung der Speisen innerhalb des Garaufsatzes, d. h. innerhalb des selben Gefäßes, entstanden ist. Somit kann das selbe Gefäß sowohl zuerst zur Zubereitung von Speisen und sodann - nach abgeschlossener Zubereitung - zur Warmhaltung der Speisen verwendet werden. Der Garaufsatz ist während einer Zubereitung der Speisen auf ein aufheizbares Gefäß einer Küchenmaschine aufgesetzt, wobei aus dem Gefäß austretender Dampf durch in dem Bodenbereich des Garaufsatzes ausgebildete Bodenöffnungen in den Garaufsatz eintreten kann. Die Zubereitung der Speisen innerhalb des Garaufsatzes erfolgt somit in Kombination mit einem zweiten Gefäß, welches als primäre Dampfquelle Dampf erzeugt und in den Garaufsatz weiterleitet. Der in den Garaufsatz eingeleitete Dampf kondensiert an der Innenwandung des Garaufsatzes und/oder den in dem Garaufsatz enthaltenen Speisen und fließt in die Rinne, wo das Kondensat schließlich in einem anschließenden Verfahrensschritt mittels einer im Bereich der Rinne angeordneten Heizeinrichtung wieder verdampft werden kann. Dabei kann das Verdampfen aus der Rinne zusätzlich zu dem aus dem aufheizbaren Gefäß der Küchenmaschine aufsteigenden Dampf zum Warmhalten und/oder zum Zubereiten von Speisen verwendet werden, oder unabhängig davon. Im letztgenannten Fall kann der Garaufsatz von dem aufheizbaren Gefäß der Küchenmaschine getrennt werden, so dass der Garaufsatz als Standalone-Gerät zum Warmhalten und/oder Zubereiten von Speisen funktioniert.

Im Übrigen gelten alle zuvor in Bezug auf den Garaufsatz mit Rinne erläuterten Vorteile und Merkmale auch im Zusammenhang mit dem erfindungsgemäßen Verfahren und umgekehrt. Beispielsweise kann das Verfahren analog auch in Zusammenhang mit einer Rinne eingesetzt werden, welche nicht in dem Bodenbereich des Garaufsatzes ausgebildet ist, sondern stattdessen in einem Einlegeboden, welcher in dem Garaufsatz angeordnet wird.

Im Folgenden wird die Erfindung anhand eines Ausführungsbeispiels näher erläutert. Es zeigen:
- Figur 1:: eine Küchenmaschine mit einem Gefäß und einem daran angeordneten Garaufsatz,
- Figur 2:: eine Schnittansicht eines Teilbereiches des Gefäßes mit einem daran angeordneten Garaufsatz gemäß einer ersten Ausführungsform,
- Figur 3:: eine Schnittansicht eines Teilbereiches des Gefäßes mit einem daran angeordneten Garaufsatz gemäß einer zweiten Ausführungsform,
- Figur 4:: eine Schnittansicht eines Garaufsatzes gemäß einer dritten Ausführungsform.

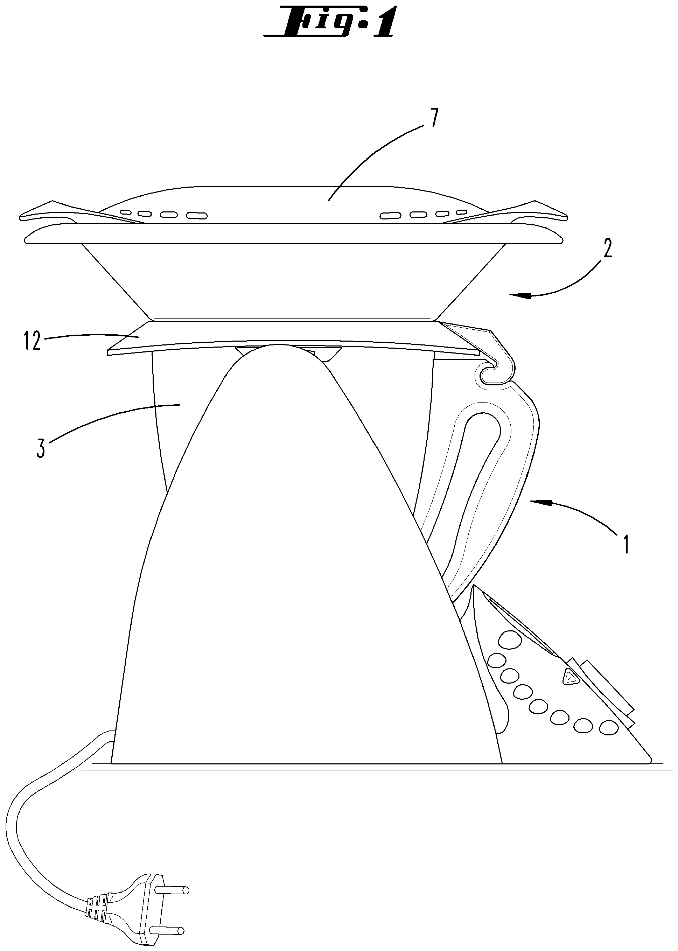

Figur 1 zeigt eine Küchenmaschine 1, welche hier beispielsweise als Kochmixgerät ausgestaltet ist. Die Küchenmaschine 1 weist ein Gefäß 3 (hier: Rührgefäß) mit einem Gefäßdeckel 12 auf. Der Gefäßdeckel 12 verfügt über eine zentrale Gefäßdeckelöffnung 13, durch welche in dem Gefäß 3 erzeugter Dampf in einen an dem Gefäß 3 angeordneten Garaufsatz 2 strömen kann.

Der Garaufsatz 2 ist mit einem Deckel 7 verschlossen, welcher gegebenenfalls Öffnungen zum Entweichen von Dampf aufweist. Dem Gefäß 3 ist darüber hinaus eine Heizung (nicht dargestellt) zur Aufheizung des Gefäßes 3 zugeordnet. Ebenfalls ist in dem Gefäß 3 gegebenenfalls ein Rührwerk angeordnet.

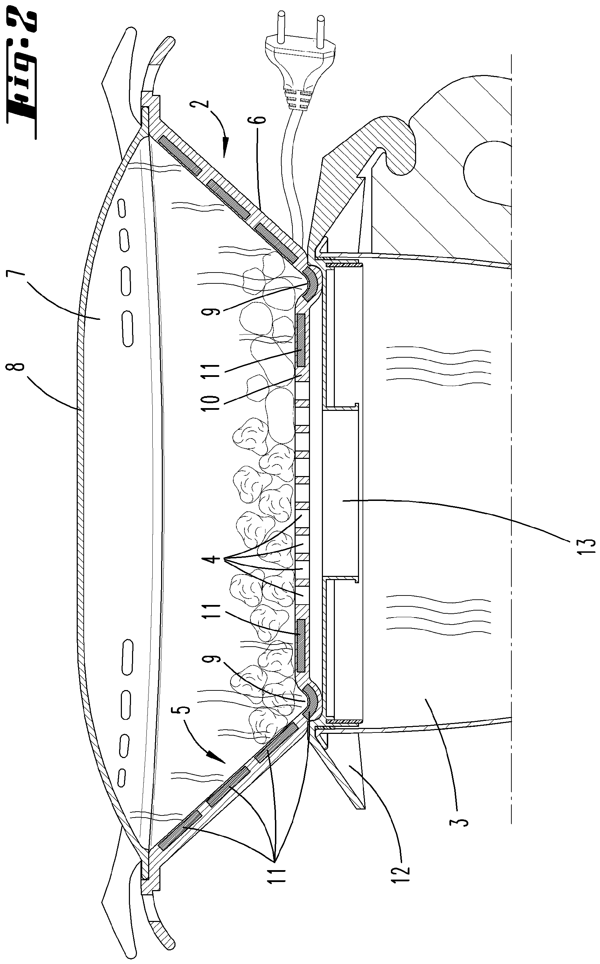

Die in Figur 2 dargestellte Schnittansicht zeigt einen oberen Teilbereich des Gefäßes 3 mit dem Gefäßdeckel 12 sowie den Garaufsatz 2 mit dem Deckel 7. Der Gefäßdeckel 12 verschließt das Gefäß 3 zumindest teilweise, wobei an dem Gefäßdeckel 12 die zentrale Gefäßdeckelöffnung 13 ausgebildet ist, durch welche Dampf aus dem Gefäß 3 in den Garaufsatz 2 strömen kann.

Der Garaufsatz 2 weist eine Garaufsatzwandung 6 auf, innerhalb der eine Heizeinrichtung 5 mit mehreren Teileinrichtungen 11 angeordnet ist. In einem Bodenbereich 10 des Garaufsatzes 2 ist darüber hinaus eine Rinne 9 angeordnet, welche den Bodenbereich 10 des Garaufsatzes 2 im Wesentlichen ringförmig umgibt. Die Teileinrichtungen 11 der Heizeinrichtung 5 sind ebenfalls ringförmig ausgebildet, wobei diese in übereinander angeordneten Ebenen parallel zueinander verlaufen. Darüber hinaus weist auch der Bodenbereich 10 des Garaufsatzes 2 eine ringförmige Teileinrichtung 11 auf, welche innerhalb des durch die Rinne 9 gebildeten Ringes angeordnet ist. Die Heizeinrichtung 5 kann beispielsweise eine elektrische Widerstandsheizung mit einzelnen Widerstandselementen sein, wobei die Widerstandselemente Teileinrichtungen 11 im Sinne der Erfindung darstellen. Der Garaufsatz 2 verfügt über einen Netzanschluss zur Spannungsversorgung der Heizeinrichtung 5. Obwohl der Garaufsatz 2 in den gezeigten Ausführungsbeispielen über einen eigenen Netzstecker verfügt, kann die Heizeinrichtung 5 des Garaufsatzes 2 alternativ auch über die Küchenmaschine 1 und/oder das aufheizbare Gefäß 3 mit Spannung versorgt werden. Sofern der Garaufsatz 2 über eine eigenständige Spannungsversorgung verfügt, kann der Garaufsatz 2 vorteilhaft als Standalone-Gerät verwendet werden, so dass dieses auch unabhängig von der Küchenmaschine 1 und/oder dem aufheizbaren Gefäß 3 verwendet werden kann.

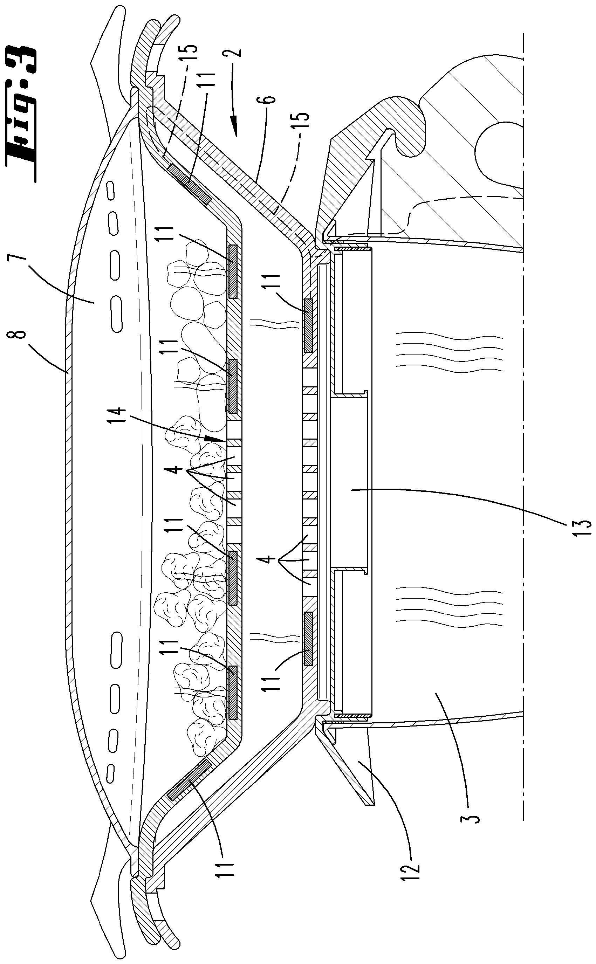

Wie in Figur 3 dargestellt kann der Garaufsatz 2 einen (oder auch mehr als einen) Einlegeboden 14 aufweisen, welcher ebenfalls Teileinrichtungen 11 der Heizeinrichtung 5 aufweist. Vorteilhaft sind die Teileinrichtungen 11 sowohl im Bodenbereich als auch im Seitenbereich des Einlegebodens 14 angeordnet. Der Garaufsatz 2 und der Einlegeboden 14 werden über die Küchenmaschine 1 mit Spannung versorgt. Dafür weisen die Küchenmaschine 1, das Gefäß 3, der Gefäßdeckel 12 und die Garaufsatzwandung 6 bzw. auch der Einlegeboden 14 Elektroleitungen 15 auf. An den Schnittstellen zwischen Küchenmaschine 1 und Gefäß 3, Gefäß 3 und Gefäßdeckel 12, Gefäßdeckel 12 und Garaufsatz 2 bzw. Garaufsatz 2 und Einlegeboden 14 sind entsprechende elektrische Kontakte angeordnet, um die elektrische Versorgung sicherzustellen.

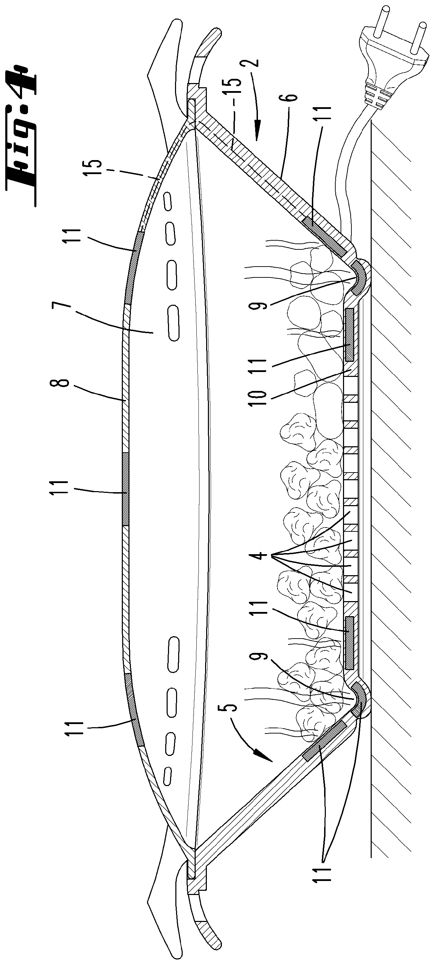

In Figur 4 ist ein Garaufsatz 2 in Alleinstellung gezeigt, d. h. der Garaufsatz 2 ist nicht mit einem aufheizbaren Gefäß 3 einer Küchenmaschine 1 verbunden. Der dargestellte Garaufsatz 2 weist eine Rinne 9 auf, welche einen Bodenbereich 10 des Garaufsatzes 2 ringförmig umgibt. Der Rinne 9 sowie auch angrenzenden Teilbereichen des Bodenbereiches 10 und der Garaufsatzwandung 6 sind Teileinrichtungen 11 einer Heizeinrichtung 5 zugeordnet. Der Garaufsatz 2 verfügt über einen Netzanschluss zur Spannungsversorgung. Der Deckel 7 des Garaufsatzes 2 weist ebenfalls eine Heizeinrichtung 5 mit mehreren Teileinrichtungen 11 auf, wobei der Deckel 7 über Kontakte und Elektroleitungen 15 an die Spannungsversorgung des Garaufsatzes 2 angeschlossen ist.

Die Erfindung funktioniert so, dass der Nutzer der Küchenmaschine 1 das Gefäß 3 mit einer Flüssigkeit, beispielsweise Wasser, befüllt und mittels des Gefäßdeckels 12 verschließt. Auf dem Gefäßdeckel 12 wird der Garaufsatz 2 angeordnet. In den Garaufsatz 2 werden zu garende Speisen eingebracht. Der Garaufsatz 2 wird mit dem Deckel 7 verschlossen. Gegebenenfalls können in den Garaufsatz 2 zusätzlich ein oder mehrere Einlegeböden 14 eingebracht werden, so dass sich mehrere Ebenen innerhalb des Garaufsatzes 2 ausbilden.

Die in dem Gefäß 3 enthaltene Flüssigkeit wird mittels einer dem Gefäß 3 zugeordneten Heizung erwärmt. Sobald der Siedepunkt der Flüssigkeit erreicht ist, steigt Dampf aus dem Gefäß 3 auf und entweicht durch die Gefäßdeckelöffnung 13. Der Dampf gelangt durch die Bodenöffnungen 4 des Garaufsatzes in den Zubereitungsraum des Garaufsatzes 2, wobei die Garaufsatzwandung 6 und die in dem Garaufsatz 2 enthaltenen Speisen erwärmt werden.

Da bis zu dem Entstehen von Dampf innerhalb des Gefäßes 3 eine gewisse Zeitspanne erforderlich ist, kann der Nutzer zur Vorwärmung der in dem Garaufsatz 2 enthaltenen Speisen die Heizeinrichtung 5 zuschalten. Die Heizeinrichtung 5 ist eine Widerstandsheizung, deren Heizwiderstände in das Material der Garaufsatzwandung 6 eingebettet sind. Die einzelnen Teileinrichtungen 11 (Heizwiderstände) der Heizeinrichtung 5 sind hier unabhängig voneinander steuerbar, so dass unterschiedliche Temperaturzonen innerhalb des Garaufsatzes 2 ausgebildet werden können. So kann beispielsweise die zuoberst angeordnete Teileinrichtung 11, welche benachbart zu dem Deckel 7 angeordnet ist, eine höhere Temperatur aufweisen als die darunter liegende Teileinrichtung 11. Sofern dem Garaufsatz 2 ein oder mehrere Einlegeböden 14 (gegebenenfalls auch mit eigenen Teileinrichtungen 11) zugeordnet sind, können mehrere Etagen mit unterschiedlichen Temperaturen geheizt werden. Auf jeder Ebene kann eine andere Speisenart angeordnet werden, beispielsweise auf einer unteren Ebene Fisch und auf einer oberen Ebene Gemüse. Aufgrund der Mehrzahl von Teilbereichen 11 können die in dem Garaufsatz 2 enthaltenen Speisen auch bei zueinander abweichenden Eigenschaften zu dem gleichen Zeitpunkt fertig gegart werden.

Das Ein- und Ausschalten der Heizeinrichtung 5 kann entweder manuell durch den Nutzer oder automatisch durch eine Steuerung der Küchenmaschine 1 erfolgen. Sofern eine automatische Steuerung zum Einsatz kommt, kann die Heizeinrichtung 5 in Abhängigkeit von einem aktuellen Zubereitungsfortschritt eines Rezeptes gesteuert werden.

Wie beispielhaft in Figur 4 gezeigt, kann auch der Deckel 7 des Garaufsatzes 2 eine Heizeinrichtung 5 mit einer oder mehreren Teileinrichtungen 11 aufweisen. Die Teileinrichtungen 11 können so in oder an der Deckelwandung 8 des Deckels 7 angeordnet sein, dass diese Wärmeenergie in Richtung des Zubereitungsraumes des Garaufsatzes 2 abgeben. Dadurch können Speisen beispielsweise vorteilhaft mit Käse überbacken oder auch gegrillt werden. Die Spannungsversorgung der in dem Deckel 7 angeordneten Teileinrichtungen 11 erfolgt vorteilhaft über den Netzanschluss des Garaufsatzes 2.

Sobald das in dem Gefäß 3 enthaltene Wasser verdampft, werden die in dem Garaufsatz 2 enthaltenen Speisen sowohl durch den Dampf als auch durch die Heizeinrichtung 5 gegart. Gegebenenfalls kann die Heizeinrichtung 5 zu diesem Zeitpunkt ausgeschaltet werden, so dass die Speisen nur noch durch den Dampf erwärmt werden.

Sobald die Speisen fertig zubereitet sind wird die dem Gefäß 3 zugeordnete Heizung ausgeschaltet, so dass ein Austreten von Dampf aus dem Gefäß 3 in das Gargefäß 2 gestoppt wird. Der Nutzer kann die Speisen nun dem Garaufsatz 2 entnehmen und auf einem Teller anrichten.

Sofern der Nutzer die Speisen nach der Zubereitung noch nicht sofort aus dem Garaufsatz 2 entnehmen möchte, kann der Garaufsatz 2 als Warmhaltegefäß genutzt werden. Dabei wird die Heizeinrichtung 5 in einem Warmhaltemodus betrieben. Der Garaufsatz 2 kann dabei auf dem Gefäß 3 angeordnet bleiben (wie in den Figuren 2 oder 3 gezeigt) oder aber von dem Gefäß 3 entfernt werden (wie in Figur 4 gezeigt).

Um in dem Warmhaltemodus ein Austrocknen der in dem Garaufsatz 2 angeordneten Speisen zu verhindern, wird in der in dem Bodenbereich 10 des Garaufsatzes 2 ausgebildeten Rinne 9 Flüssigkeit, beispielsweise gesammeltes Kondensat aus einem vorausgegangenem Verdampfungszyklus, verdampft. Dazu wird die in der Rinne 9 gesammelte Flüssigkeit durch eine der Rinne 9 nächstliegende Teileinrichtung 11 erhitzt. Durch den Heizvorgang verdampft die Flüssigkeit, wodurch die Speisen innerhalb des Garaufsatzes 2 zum einen geheizt und zum anderen feucht gehalten werden. Somit kann ein vorzeitiges Abkühlen und Austrocknen der Speisen verhindert oder zumindest verzögert werden. Die Flüssigkeit kann alternativ zu gesammeltem Kondensat auch Flüssigkeit aus den Speisen oder separat zugegebene Flüssigkeit sein.

Die Beheizung der Rinne 9 mittels der zugeordneten Teileinrichtung 11 kann wahlweise nur für einen Warmhaltemodus des Garaufsatzes 2 genutzt werden oder auch bereits während der Zubereitung der Speisen.

### Bezugszeichenliste

- 1: Küchenmaschine
- 2: Garaufsatz
- 3: Gefäß
- 4: Bodenöffnung
- 5: Heizeinrichtung
- 6: Garaufsatzwandung
- 7: Deckel
- 8: Deckelwandung
- 9: Rinne
- 10: Bodenbereich
- 11: Teileinrichtung
- 12: Gefäßdeckel
- 13: Gefäßdeckelöffnung
- 14: Einlegeboden
- 15: Elektroleitung

## Patentansprüche

1. Garaufsatz (2) für ein aufheizbares Gefäß (3) einer Küchenmaschine (1), welcher Garaufsatz (2) eine oder mehrere Bodenöffnungen (4) aufweist, durch welche aus dem Gefäß (3) austretender Dampf in den Garaufsatz (2) eintreten und Kondensat aus dem Garaufsatz (2) in das Gefäß (3) fließen kann, **dadurch gekennzeichnet, dass** der Garaufsatz (2) eine unabhängig von dem aus dem Gefäß (3) austretenden Dampf heizende Heizeinrichtung (5) aufweist.

2. Garaufsatz (2) nach Anspruch 1, **dadurch gekennzeichnet, dass** der Garaufsatz (2) eine Garaufsatzwandung (6) aufweist, wobei die Heizeinrichtung (5) in oder an der Garaufsatzwandung (6) angeordnet ist.

3. Garaufsatz (2) nach Anspruch 1 oder 2, **dadurch gekennzeichnet, dass** der Garaufsatz (2) einen Deckel (7) mit einer Deckelwandung (8) aufweist, wobei die Heizeinrichtung (5) in oder an der Deckelwandung (8) angeordnet ist.

4. Garaufsatz (2) nach einem der vorhergehenden Ansprüche, **dadurch gekennzeichnet, dass** der Garaufsatz (2) einen Einlegeboden (14) aufweist, wobei die Heizeinrichtung (5) in oder an dem Einlegeboden (14) angeordnet ist.

5. Garaufsatz (2) nach einem der vorhergehenden Ansprüche, **dadurch gekennzeichnet, dass** der Garaufsatz (2) und/oder der Einlegeboden (14) eine Rinne (9) aufweist, welche ausgebildet ist, Flüssigkeit, insbesondere in dem Garaufsatz (2) entstehendes Kondensat und/oder Flüssigkeit von in dem Garaufsatz (2) enthaltenen Speisen, aufzunehmen.

6. Garaufsatz (2) nach Anspruch 5, **dadurch gekennzeichnet, dass** die Rinne (9) in der Garaufsatzwandung (6) ausgeformt ist, insbesondere einen Bodenbereich (10) der Garaufsatzwandung (6) ringförmig begrenzt.

7. Garaufsatz (2) nach Anspruch 5 oder 6, **dadurch gekennzeichnet, dass** die Heizeinrichtung (5) der Rinne (9) zugeordnet ist.

8. Garaufsatz (2) nach einem der vorhergehenden Ansprüche, **dadurch gekennzeichnet, dass** die Heizeinrichtung (5) eine Mehrzahl von in oder an der Garaufsatzwandung (6) und/oder der Deckelwandung (8) und/oder dem Einlegeboden ausgebildeten Teileinrichtungen (11) aufweist.

9. Garaufsatz (2) nach einem der vorhergehenden Ansprüche, **dadurch gekennzeichnet, dass** die Heizeinrichtung (5) eine Induktions- und/oder Konvektionsheizung aufweist.

10. Küchenmaschine (1), insbesondere Kochmixgerät, mit einem Garaufsatz (2) nach einem der vorhergehenden Ansprüche.

11. Verfahren zum Warmhalten und/oder Zubereiten von Speisen innerhalb eines Garaufsatzes (2), insbesondere innerhalb eines Garaufsatzes (2) nach einem der Ansprüche 5 bis 9, **dadurch gekennzeichnet, dass** innerhalb einer in dem Garaufsatz (2) ausgebildeten Rinne (9) enthaltene Flüssigkeit mittels einer der Rinne (9) zugeordneten Heizeinrichtung (5) verdampft wird, wobei die Rinne (9) die Speisen, insbesondere ringförmig, umgibt, so dass aus der Rinne (9) aufsteigender Dampf die nicht in Kontakt mit dem Garaufsatz (2) und/oder einem Einlegeboden (14) des Garaufsatzes (2) stehenden Oberflächen der Speisen befeuchtet und/oder wärmt.

12. Verfahren nach Anspruch 11, **dadurch gekennzeichnet, dass** die in der Rinne (9) enthaltene Flüssigkeit bei einer zeitlich vorausgegangenen Zubereitung der Speisen innerhalb des Garaufsatzes (2), insbesondere Dampfgarung, entstandenes Kondensat ist.

13. Verfahren nach Anspruch 11 oder 12, **dadurch gekennzeichnet, dass** der Garaufsatz (2) während einer Zubereitung der Speisen auf ein aufheizbares Gefäß (3) einer Küchenmaschine (1) aufgesetzt ist, wobei aus dem Gefäß (3) austretender Dampf durch in dem Bodenbereich (10) des Garaufsatzes (2) ausgebildete Bodenöffnungen (4) in den Garaufsatz (2) eintreten kann.

## Claims

1. A cooking attachment (2) for a heatable vessel (3) of a food processor (1), wherein said cooking attachment (2) features one or more bottom openings (4), through which steam exiting the vessel (3) can enter the cooking attachment (2) and condensate can flow from the cooking attachment (2) into the vessel (3), **characterized in that** the cooking attachment (2) features a heating device (5), which provides heating irrespective of the steam exiting the vessel (3).

2. The cooking attachment (2) according to claim 1, **characterized in that** the cooking attachment (2) has a cooking attachment wall (6), wherein the heating device (5) is arranged in or on the cooking attachment wall (6).

3. The cooking attachment (2) according to claim 1 or 2, **characterized in that** the cooking attachment (2) features a lid (7) with a lid wall (8), wherein the heating device (5) is arranged in or on the lid wall (8).

4. The cooking attachment (2) according to one of the preceding claims, **characterized in that** the cooking attachment (2) features an insertable base (14), wherein the heating device (5) is arranged in or on the insertable base (14).

5. The cooking attachment (2) according to one of the preceding claims, **characterized in that** the cooking attachment (2) and/or the insertable base (14) features a channel (9), which is designed for collecting liquid, in particular, in the form of condensate forming in the cooking attachment (2) and/or liquid originating from the foods contained in the cooking attachment (2).

6. The cooking attachment (2) according to claim 5, **characterized in that** the channel (9) is formed in the cooking attachment wall (6) and, in particular, annularly defines a bottom region (10) of the cooking attachment wall (6).

7. The cooking attachment (2) according to claim 5 or 6, **characterized in that** the heating device (5) is assigned to the channel (9).

8. The cooking attachment (2) according to one of the preceding claims, **characterized in that** the heating device (5) comprises a plurality of partial elements (11), which are arranged in or on the cooking attachment wall (6) and/or the lid wall (8) and/or the insertable base.

9. The cooking attachment (2) according to one of the preceding claims, **characterized in that** the heating device (5) features an induction and/or convection heater.

10. A food processor (1), particularly a cooking and mixing utensil, with a cooking attachment (2) according to one of the preceding claims.

11. A method for preparing and/or keeping foods hot within a cooking attachment (2), particularly within a cooking attachment (2) according to one of claims 5 to 9, **characterized in that** liquid contained within a channel (9) formed in the cooking attachment (2) is evaporated by means of a heating device (5) assigned to the channel (9), wherein the channel (9) particularly surrounds the foods annularly such that steam rising from the channel (9) moistens and/or heats the surfaces of the foods, which are not in contact with the cooking attachment (2) and/or an insertable base (14) of the cooking attachment (2).

12. The method according to claim 11, **characterized in that** the liquid contained in the channel (9) consists of condensate formed during the previous preparation of the foods within the cooking attachment (2), particularly a steaming process.

13. The method according to claim 11 or 12, **characterized in that** the cooking attachment (2) is attached to a heatable vessel (3) of a food processor (1) while the foods are prepared, wherein steam exiting the vessel (3) can enter the cooking attachment (2) through openings (4) arranged in the bottom region (10) of the cooking attachment (2

## Revendications

1. Accessoire de cuisson (2) pour un récipient (3) pouvant être chauffé d'un robot de cuisine (1), lequel accessoire de cuisson (2) comporte une ou plusieurs ouvertures de fond (4) à travers lesquelles de la vapeur s'échappant du récipient (3) peut entrer dans l'accessoire de cuisson (2) et un produit de condensation peut s'écouler depuis l'accessoire de cuisson (2) dans le récipient (3), **caractérisé en ce que** l'accessoire de cuisson (2) comporte un dispositif de chauffage (5) qui chauffe indépendamment de la vapeur s'échappant du récipient (3).

2. Accessoire de cuisson (2) selon la revendication 1, **caractérisé en ce que** l'accessoire de cuisson (2) présente une paroi d'accessoire de cuisson (6), dans lequel le dispositif de chauffage (5) est disposé dans ou contre/sur la paroi de cuisson (6) .

3. Accessoire de cuisson (2) selon la revendication 1 ou 2, **caractérisé en ce que** l'accessoire de cuisson (2) comporte un couvercle (7) avec une paroi de couvercle (8), dans lequel le dispositif de chauffage (5) est agencé dans ou contre/sur la paroi de couvercle (8).

4. Accessoire de cuisson (2) selon l'une des revendications précédentes, **caractérisé en ce que** l'accessoire de cuisson (2) comporte un fond insérable (14), dans lequel le dispositif de chauffage (5) est agencé dans ou contre/sur le fond insérable (14).

5. Accessoire de cuisson (2) selon l'une des revendications précédentes, **caractérisé en ce que** l'accessoire de cuisson (2) et/ou le fond insérable (14) présente une rigole (9) qui est formée pour accueillir un liquide, en particulier un produit de condensation se formant dans l'accessoire de cuisson (2), et/ou un liquide provenant d'aliments contenus dans l'accessoire de cuisson (2).

6. Accessoire de cuisson (2) selon la revendication 5, **caractérisé en ce que** la rigole (9) est formée dans la paroi d'accessoire de cuisson (6), en particulier délimite sous forme d'anneau une zone de fond (10) de la paroi d'accessoire de cuisson (6) .

7. Accessoire de cuisson (2) selon la revendication 5 ou 6, **caractérisé en ce que** le dispositif de chauffage (5) est associé à la rigole (9).

8. Accessoire de cuisson (2) selon l'une quelconque des revendications précédentes, **caractérisé en ce que** le dispositif de chauffage (5) présente une pluralité de dispositifs partiels (11) formés dans ou contre/sur la paroi d'accessoire de cuisson (6) et/ou la paroi de couvercle (8) et/ou le fond insérable.

9. Accessoire de cuisson (2) selon l'une des revendications précédentes, **caractérisé en ce que** le dispositif de chauffage (5) comprend un chauffage par induction et/ou par convection.

10. Robot de cuisine (1), en particulier cuiseur-mixeur, avec un accessoire de cuisson (2) selon l'une des revendications précédentes.

11. Procédé de maintien au chaud et/ou de préparation d'aliments dans un accessoire de cuisson (2), en particulier dans un accessoire de cuisson (2) selon l'une des revendications 5 à 9, **caractérisé en ce que** du liquide contenu à l'intérieur d'une rigole (9) formée dans l'accessoire de cuisson (2) est évaporé au moyen d'un dispositif de chauffage (5) associé à la rigole (9), dans lequel la rigole (9) entoure les aliments, en particulier sous forme d'anneau , de manière à ce que de la vapeur montant depuis la rigole (9) humidifie et/ou chauffe les surfaces des aliments qui ne sont pas en contact avec l'accessoire de cuisson (2) et/ou avec un fond insérable (14) de l'accessoire de cuisson (2).

12. Procédé selon la revendication 11, **caractérisé en ce que** le liquide contenu dans la rigole (9) est un produit de condensation provenant d'une préparation précédente dans le temps des aliments à l'intérieur de l'accessoire de cuisson (2), en particulier une cuisson à la vapeur.

13. Procédé selon la revendication 11 ou 12, **caractérisé en ce que** l'accessoire de cuisson (2) est placé sur un récipient pouvant être chauffé (3) d'un robot de cuisine (1) pendant une préparation des aliments, dans lequel de la vapeur s'échappant du récipient (3) peut pénétrer dans l'accessoire de cuisson (2) par des ouvertures de fond (4) réalisées dans la zone de fond (10) de l'accessoire de cuisson (2).
